(19) Europäisches Patentamt

European Patent Office

Office européen des brevets

(11) **EP 4 222 400 B1**

(12) **FASCICULE DE BREVET EUROPEEN**

(45) Date de publication et mention de la délivrance du brevet:
**01.01.2025 Bulletin 2025/01**

(21) Numéro de dépôt: **21783238.5**

(22) Date de dépôt: **24.09.2021**

(51) Classification Internationale des Brevets (IPC):
**F16L 15/00** *(2006.01)* **B33Y 10/00** *(2015.01)*
**B33Y 80/00** *(2015.01)* **E21B 17/02** *(2006.01)*
**E21B 17/04** *(2006.01)* **E21B 17/042** *(2006.01)*

(52) Classification Coopérative des Brevets (CPC):
**F16L 15/006; B33Y 10/00; B33Y 80/00; E21B 17/02;** Y02P 10/25

(86) Numéro de dépôt international:
**PCT/EP2021/076352**

(87) Numéro de publication internationale:
**WO 2022/069366 (07.04.2022 Gazette 2022/14)**

(54) **PIÈCE DE RACCORDEMENT TUBULAIRE MÉTALLIQUE ET PROCÉDÉ D'OBTENTION D'UNE TELLE PIÈCE PAR FABRICATION ADDITIVE**

ROHRFÖRMIGES METALLTEIL UND VERFAHREN ZUR HERSTELLUNG SOLCH EINES TEILS DURCH GENERATIVE FERTIGUNG

METAL TUBULAR CONNECTING PART AND METHOD FOR OBTAINING SUCH A PART BY ADDITIVE MANUFACTURING

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **01.10.2020 FR 2010068**

(43) Date de publication de la demande:
**09.08.2023 Bulletin 2023/32**

(73) Titulaire: **Vallourec Oil and Gas France**
**59620 Aulnoye-Aymeries (FR)**

(72) Inventeurs:
• **MAILLON, Bertrand**
**92190 Meudon (FR)**
• **NOEL, Alexandre**
**92190 Meudon (FR)**
• **TAISNE, Thierry**
**92190 Meudon (FR)**
• **CARUSO, Umberto**
**92190 Meudon (FR)**

(74) Mandataire: **Casalonga**
**Casalonga & Partners**
**Bayerstraße 71/73**
**80335 München (DE)**

(56) Documents cités:
WO-A1-2019/016254    CN-A- 106 869 813
US-A- 5 423 579    US-A1- 2011 227 337
US-A1- 2016 376 849

**Description**

La présente invention se rapporte aux composants tubulaires métalliques dans le domaine du pétrole et du gaz, de l'énergie ou du stockage, et notamment pour une utilisation telle que l'exploitation de puits d'hydrocarbures ou le transport d'hydrocarbures, la géothermie ou la capture de carbone.

Plus précisément, la présente invention concerne une pièce de raccordement tubulaire métallique, par exemple en acier, destinée à raccorder au moins deux composants tubulaires métalliques non compatibles du fait que le diamètre interne et/ou externe, l'épaisseur, la géométrie du filetage à raccorder sont différents. De telles pièces de raccordement (1) possède une limite d'élasticité de préférence supérieure ou égale à 550 MPa.

Au sens de la présente invention, on entend par « pièce de raccordement » un accessoire de liaison, ou raccord, fréquemment désigné dans la littérature par l'un des termes anglais suivants : « cross-over », « circulating heads », « circulating swage » ou « water bushing ». La présente invention se rapporte en outre à un procédé d'obtention d'une telle pièce de raccordement tubulaire métallique par fabrication additive.

Dans l'art antérieur, de telles pièces de raccordement tubulaires métalliques possèdent deux extrémités filetées ayant généralement un diamètre différent l'une de l'autre, et une portion de transition reliant les deux extrémités filetées et permettant, le cas échéant, de passer progressivement d'un diamètre à l'autre. Ces pièces de raccordement tubulaires métalliques sont obtenues par des méthodes de fabrication soustractives, notamment par divers processus d'usinage et d'enlèvement de matière contrôlés (ex : découpe ou perçage), réalisés à partir de blocs, barres métalliques solides ou de tubes épais.

Des pièces de raccordement tubulaire métalliques résistantes ayant des extrémités de diamètres différents sont connues des documents US2011227337A et US 2016376849A. Un tube métallique comportant des surfaces de transition externes et internes et muni de filetages à ses extrémité est connu du document US5423579A.

Les pièces de raccordement de l'art antérieur présentent l'inconvénient d'être très lourdes, ce qui complique le travail des opérateurs qui doivent manipuler ces pièces de raccordement, en particulier lors du transport, de la manutention et de l'utilisation. En outre, les méthodes soustractives utilisées pour la fabrication des pièces de raccordement de l'art antérieur présentent plusieurs inconvénients. En particulier, plus la quantité de matière à enlever est importante, plus le coût de fabrication est élevé. Par conséquent, avec les méthodes soustractives, les fabricants sont contraints d'enlever le moins de matière possible afin d'optimiser le coût de revient pour la fabrication d'une pièce. Cette contrainte d'ordre économique est à l'origine d'une contrainte technique, à savoir qu'une quantité minimum de matière est soustraite, si bien que la paroi des pièces de raccordement de l'état de l'art présente une épaisseur importante dans la portion de transition. Au niveau de cette portion de transition, d'avantage de matière pourrait être retirée et permettrait de diminuer le poids de la pièce et de faciliter sa manipulation par les opérateurs lors du transport, de l'utilisation et lors d'opérations de manutention. Au lieu de cela, à des fins d'économie de coûts, la pièce finale présente un surplus important de matière au niveau de sa portion de transition, la rendant lourde et encombrante. De plus, ce surplus de matière représente également une perte de matière qui pourrait être réutilisée pour la fabrication d'autres pièces. Cette perte matérielle finit donc par devenir également une perte économique.

Afin de résoudre les inconvénients des pièces de raccordement de l'art antérieur, l'objet de la présente invention concerne une pièce de raccordement tubulaire métallique possédant au moins un axe de révolution (x) et une longueur axiale totale ($L_T$), ladite pièce de raccordement comprenant :

- une surface interne et une surface externe, lesdites surfaces interne et externe délimitant une paroi,
- au moins un premier plan de transition externe ($B_{ext}$) et au moins un deuxième plan de transition externe ($D_{ext}$), lesdits plans de transition externe ($B_{ext}$) et ($D_{ext}$) étant tous les deux orthogonaux à l'axe de révolution (x),
- au moins un premier plan de transition interne ($A_{int}$) et au moins un deuxième plan de transition interne ($C_{int}$), lesdits plans de transition interne ($A_{int}$) et ($C_{int}$) étant tous les deux orthogonaux à l'axe de révolution (x),
- une surface de transition externe ($ST_{ext}$) qui présente une forme tronconique définie par une génératrice de transition externe (G) ayant une inclinaison d'angle $\alpha 1$ par rapport à l'axe de révolution (x), ladite surface de transition externe ($ST_{ext}$) s'étendant à partir du premier plan de transition externe ($B_{ext}$) jusqu'au deuxième plan de transition externe ($D_{ext}$),
- une surface de transition interne ($ST_{int}$) qui présente une forme tronconique définie par une génératrice de transition interne (G") ayant une inclinaison d'angle $\alpha 2$ par rapport à l'axe de révolution (x), ladite surface de transition interne ($ST_{int}$) s'étendant à partir du premier plan de transition interne ($A_{int}$) jusqu'au deuxième plan de transition interne ($C_{int}$), lesdites surfaces de transition externe ($ST_{ext}$) et interne ($ST_{int}$) délimitant une épaisseur de transition (W) de paroi,
- une première extrémité filetée mâle ou femelle, possédant un premier plan d'extrémité (S1) orthogonal à l'axe de révolution (x), un premier diamètre interne ($ID_1$) et un premier diamètre externe ($OD_1$), ladite première extrémité étant définie par une première portion de surface interne ($P1_{int}$) de diamètre interne ($ID_1$) et s'étendant à partir du premier plan d'extrémité (S1) jusqu'au premier plan de transition interne ($A_{int}$), et par une première portion de surface externe ($P1_{ext}$) de diamètre externe ($OD_1$) et s'étendant sur une première longueur axiale ($L_1$) à partir du premier plan d'extrémité (S1) jusqu'au premier plan de transition externe ($B_{ext}$), ladite première portion de surface interne ($P1_{int}$) présentant une forme substantiellement cylindrique définie par une première génératrice de surface interne ($G1_{int}$), et ladite première portion de surface externe ($P1_{ext}$) présentant une forme substantiellement cylindrique définie par une première génératrice de surface externe ($G1_{ext}$),

- une deuxième extrémité filetée mâle ou femelle, possédant un deuxième plan d'extrémité (S2) orthogonal à l'axe de révolution (x), un deuxième diamètre interne ($ID_2$) et un deuxième diamètre externe ($OD_2$), ladite deuxième extrémité étant définie par une deuxième portion de surface interne ($P2_{int}$) de diamètre interne ($ID_2$) et s'étendant sur une deuxième longueur axiale ($L_2$) à partir du deuxième plan d'extrémité (S2) jusqu'au deuxième plan de transition interne ($C_{int}$), et par une deuxième portion de surface externe ($P2_{ext}$) de diamètre externe ($OD_2$) et s'étendant à partir du deuxième plan d'extrémité (S2) jusqu'au deuxième plan de transition externe ($D_{ext}$), ladite portion de surface interne ($P2_{int}$) présentant une forme substantiellement cylindrique définie par une deuxième génératrice de surface interne ($G2_{int}$), ladite deuxième portion de surface externe ($P2_{ext}$) présentant une forme substantiellement cylindrique définie par une deuxième génératrice de surface externe ($G2_{ext}$),

la somme des première et deuxième longueurs axiales ($L_1$) et ($L_2$) étant inférieure ou égale à la longueur axiale totale ($L_T$) de la pièce de raccordement,
ladite pièce de raccordement étant caractérisée en ce que la première extrémité possède une première épaisseur (E1) de paroi, la deuxième extrémité possède une deuxième épaisseur (E2) de paroi, et l'épaisseur de transition (W) respecte l'équation suivante :

$$[\text{Math}] \qquad 1 \times \max(E1; E2) \leq W \leq 1{,}5 \times \max(E1; E2)$$

Où : max (E1 ; E2) représente la plus grande valeur choisie parmi les épaisseurs (E1) et (E2), et correspond à (E1) et à (E2) lorsque (E1) et (E2) sont égales. Ainsi, les variations d'épaisseur de la paroi dans la portion de transition sont faibles. Autrement dit, l'épaisseur de la paroi dans la portion de transition est plus homogène que dans les pièces de raccordement de l'art antérieur.

Dans la présente demande de brevet, on entend par « extrémité filetée » une extrémité qui possède un filet sur toute ou partie de sa longueur. De plus, dans la présente demande de brevet, l'expression « substantiellement cylindrique » désigne une surface tubulaire susceptible de présenter des irrégularités de surface, tels que des filets.

En outre, dans la présente demande de brevet, le terme « longueur axiale » désigne toute longueur selon l'axe de révolution (x). Ainsi, tout élément ou toute portion de la pièce de raccordement qui possède une longueur axiale est un élément ou une portion ayant un axe sensiblement nul par rapport à l'axe de révolution (x) de la pièce de raccordement.

Un tel rapport entre les première et deuxième longueurs axiales ($L_1$) et ($L_2$) est dû à l'ordre dans lequel se succèdent les plans de transition le long de l'axe de révolution (x), depuis le premier plan d'extrémité (S1) vers le deuxième plan d'extrémité (S2). Selon un mode de réalisation, les plans ($B_{ext}$) et ($C_{int}$) peuvent être confondus. Dans ce cas la somme des longueurs axiales ($L_1$) et ($L_2$) est égale à la longueur axiale totale ($L_T$) de la pièce de raccordement. Selon un mode de réalisation dans lequel les plans ($B_{ext}$) et ($C_{int}$) ne sont pas confondus, le plan ($A_{int}$) est plus proche du plan ($B_{ext}$) que du plan ($C_{int}$) et le plan ($D_{ext}$) est plus proche du plan ($C_{int}$) que du plan ($B_{ext}$). Dans ce cas, la somme des longueurs axiales ($L_1$) et ($L_2$) est strictement inférieur à la longueur axiale totale ($L_T$) de la pièce de raccordement. Cette disposition des plans de transitions entraine un affinement de la portion de paroi qui se situe entre le premier plan de transition ($A_{int}$) de surface interne et le deuxième plan de transition ($D_{ext}$) de surface externe : cette portion de paroi est appelée la portion de transition. Cet affinement entraine la diminution de l'épaisseur de la paroi dans la portion de transition ainsi qu'une diminution du poids de la pièce de raccordement.

Les premier et deuxième plans d'extrémité (S1) et (S2) sont les plans qui délimitent la longueur axiale totale ($L_T$) de la pièce de raccordement. Autrement dit, la pièce de raccordement s'étend sur une longueur axiale totale ($L_T$) depuis le premier plan d'extrémité (S1) jusqu'au deuxième plan d'extrémité (S2).

Le premier plan de transition interne ($A_{int}$) est un plan de coupe transversale de la pièce de raccordement. Le plan ($A_{int}$) est orthogonal à l'axe de révolution (x) et passe par l'intersection entre la première génératrice de surface interne ($G1_{int}$) et la génératrice de transition interne (G").

Le premier plan de transition externe ($B_{ext}$) est un plan de coupe transversale de la pièce de raccordement. Le plan ($B_{ext}$) est orthogonal à l'axe de révolution (x) et passe par l'intersection entre la première génératrice de surface externe ($G1_{ext}$) et la génératrice de transition externe (G).

Le deuxième plan de transition interne ($C_{int}$) est un plan de coupe transversale de la pièce de raccordement. Le plan ($C_{int}$) est orthogonal à l'axe de révolution (x) et passe par l'intersection entre la deuxième génératrice de surface interne ($G2_{int}$) et la génératrice de transition interne (G").

Le deuxième plan de transition externe ($D_{ext}$) est un plan de coupe transversale de la pièce de raccordement. Le plan ($D_{ext}$) est orthogonal à l'axe de révolution (x) et passe par l'intersection entre la deuxième génératrice de surface

externe (G2$_{ext}$) et la génératrice de transition externe (G).

L'épaisseur de transition (W) correspond à l'épaisseur de la portion de paroi qui s'étend du premier plan de transition externe (B$_{ext}$) jusqu'au deuxième plan de transition interne (C$_{int}$). Autrement dit, l'épaisseur de transition (W) s'étend sur toute la portion de paroi dans laquelle les surfaces de transition externe (ST$_{ext}$) et interne (ST$_{int}$) se superposent. La longueur sur laquelle s'étend l'épaisseur de transition (W) est donc délimitée par le premier plan de transition externe (B$_{ext}$) et le deuxième plan de transition interne (C$_{int}$).

Dans la présente demande de brevet, le terme « épaisseur », lorsqu'il se rapporte à n'importe quelle portion de la paroi, désigne une épaisseur mesurée selon un axe perpendiculaire à au moins l'une des surfaces délimitant la paroi dans la portion considérée, c'est-à-dire l'une des surfaces suivantes : surface interne, surface externe, surface de transition interne (ST$_{int}$) ou surface de transition externe (ST$_{ext}$).

Les deux génératrices de surface interne (G1$_{int}$) et (G2$_{int}$), et les deux génératrices de surface externe (G1$_{ext}$) et (G2$_{ext}$) ont toutes un angle sensiblement nul par rapport à l'axe de révolution (x). On entend ici par « angle sensiblement nul » un angle qui est inférieur ou égale à 2° par rapport à l'axe de révolution (x).

Selon un mode de réalisation, le premier diamètre externe (OD$_1$) est différent du deuxième diamètre externe (OD$_2$).

Selon un mode de réalisation, le premier diamètre interne (ID$_1$) est différent du deuxième diamètre interne (ID$_2$).

Selon un mode de réalisation, le premier diamètre externe (OD$_1$) est différent du deuxième diamètre externe (OD$_2$), et le premier diamètre interne (ID$_1$) est différent du deuxième diamètre interne (ID$_2$).

Selon un mode de réalisation, le diamètre (OD$_2$) peut être égal au diamètre (ID$_1$).

Selon un mode de réalisation, les premier et deuxième diamètres externes (OD$_1$) et (OD$_2$) sont compris entre 25 mm et 950 mm. Préférentiellement, le plus grand des deux diamètres externes (OD$_1$) et (OD$_2$) est compris entre 75 mm et 950 mm, et le plus petit des deux diamètres externes (OD$_1$) et (OD$_2$) est compris entre 25 mm et 700 mm.

Selon un mode de réalisation, les premier et deuxième diamètres internes (ID$_1$) et (ID$_2$) sont compris entre 20 mm et 900 mm. Préférentiellement, le plus grand des deux diamètres internes (ID$_1$) et (ID$_2$) est compris entre 70 mm et 900 mm, et le plus petit des deux diamètres internes (ID$_1$) et (ID$_2$) est compris entre 20 mm et 695 mm.

Préférentiellement, la différence entre (OD$_1$) et (OD$_2$) est inférieur ou égale à 500 mm et la différence entre (ID$_1$) et (ID$_2$) est inférieur ou égale à 500 mm.

La premier diamètre interne (ID$_1$) est mesuré à proximité du premier plan de transition interne (A$_{int}$). Le deuxième diamètre interne (ID$_2$) est mesuré à proximité du deuxième plan de transition interne (C$_{int}$). Le premier diamètre externe (OD$_1$) est mesuré à proximité du premier plan de transition externe (B$_{ext}$). Le deuxième diamètre externe (OD$_2$) est mesuré à proximité du deuxième plan de transition interne (D$_{ext}$). Les diamètres internes et externes des première et deuxième extrémités peuvent varier en conséquent.

Toutes les caractéristiques précitées contribuent, individuellement ou en combinaison les unes avec les autres, à faire diminuer l'épaisseur de la paroi dans la portion de paroi située entre le premier plan de transition interne (A$_{int}$) et le deuxième plan de transition externe (D$_{ext}$) : cette portion de paroi étant appelée la portion de transition.

Selon un mode de réalisation, la première extrémité possède au moins une première partie non filetée, et la deuxième extrémité possède au moins une deuxième partie non filetée.

Selon un mode de réalisation, la première partie non filetée s'étend sur une première longueur non filetée (I$_1$) à partir du premier plan de transition interne (A$_{int}$), et la deuxième partie non filetée s'étend sur une deuxième longueur non filetée (h) à partir du deuxième plan de transition interne (C$_{int}$).

Les première et deuxième longueurs non filetées (I$_1$) et (I$_2$) sont des longueurs axiales. Avantageusement, chacune des première et deuxième longueurs non filetées (I$_1$) et (I$_2$) est supérieure ou égale à 150 mm. Une telle longueur des parties non filetées permet à la pièce de raccordement d'être saisie, ou agrippée, par les outils couramment utilisés par les opérateurs pour assembler, par exemple par vissage, la pièce de raccordement aux au moins deux composants tubulaires à raccorder.

Selon un mode de réalisation, la surface interne comprend les parties suivantes depuis le premier plan d'extrémité (S1) jusqu'au deuxième plan d'extrémité (S2) :

- une première partie (T1$_{int}$) filetée ou non filetée,
- une première partie non filetée cylindrique,
- une partie (ST$_{int}$) tronconique,
- une deuxième partie non filetée cylindrique, et
- une deuxième partie (T2$_{int}$) filetée ou non filetée.

Selon un mode de réalisation, la surface externe comprend les parties suivantes depuis le premier plan d'extrémité (S1) jusqu'au deuxième plan d'extrémité (S2) :

- une première partie (T1$_{ext}$) filetée ou non filetée,

- une troisième partie non filetée cylindrique,
- une partie ($ST_{ext}$) tronconique,
- une quatrième partie non filetée cylindrique, et
- une deuxième partie ($T2_{ext}$) filetée ou non filetée.

Selon un mode de réalisation, les première et deuxième épaisseur (E1) et (E2) sont comprises entre 2 mm et 300 mm, plus préférentiellement entre 2 mm et 150 mm, encore plus préférentiellement entre 2 mm et 75 mm.

Selon un mode de réalisation, les première et deuxième épaisseur (E1) et (E2) sont telles que $|(E1) - (E2)| \leq 65$ mm, préférentiellement telles que $|(E1) - (E2)| \leq 40$mm, encore plus préférentiellement telles que $|(E1) - (E2)| \leq 25$mm.

De façon préférée, les première et deuxième épaisseur (E1) et (E2) sont égales.

Selon un mode de réalisation, les angles $\alpha 1$ et $\alpha 2$ sont tous les deux compris inclusivement entre 10° et 30° par rapport à l'axe de révolution (x). Cela permet qu'un fluide puisse s'écouler de façon optimale à travers la pièce de raccordement. Préférentiellement les angles $\alpha 1$ et $\alpha 2$ sont tous les deux compris inclusivement entre 15° et 25°, et plus préférentiellement $\alpha 1$ et $\alpha 2$ ont tous les deux une valeur de 20°. Lorsque les angles $\alpha 1$ et $\alpha 2$ sont supérieurs à 30°, un fluide ne peut plus s'écouler de façon optimale et la pièce de raccordement perd de son efficacité dans sa fonction de transport de fluide. Lorsque les angles $\alpha 1$ et $\alpha 2$ sont inférieurs à 10°, la longueur axiale totale ($L_T$) de la pièce est trop importante et ne respecte plus les normes dimensionnelles pour ce type d'accessoire. Les normes dimensionnelles étant établies pour une manutention et un stockage optimal de ce type de produit, il est donc préférable de ne pas allonger ces accessoires au-delà de l'incidence de 10°, c'est-à-dire de telle sorte que les angles $\alpha 1$ et $\alpha 2$ soient inférieurs à 10°.

Selon un mode de réalisation, les angles $\alpha 1$ et $\alpha 2$ sont tels que $|\alpha 1 - \alpha 2| \leq 5°$. Préférentiellement les angles $\alpha 1$ et $\alpha 2$ sont tels que $|\alpha 1 - \alpha 2| \leq 2°$. Plus préférentiellement, les angles $\alpha 1$ et $\alpha 2$ sont tels que $|\alpha 1 - \alpha 2| = 0°$ et ainsi les surfaces de transition externe ($ST_{ext}$) et interne ($ST_{int}$) sont sensiblement parallèles l'une à l'autre et l'épaisseur de transition (W) est sensiblement constante sur toute sa longueur.

Selon un mode de réalisation, l'épaisseur de transition (W) est comprise entre 2 mm et 450 mm, préférentiellement entre 2 et 225 mm, plus préférentiellement entre 3 mm et 75 mm, et encore plus préférentiellement entre 7 mm et 25 mm.

Selon un mode de réalisation, la longueur axiale totale ($L_T$) d'une pièce de raccordement est comprise entre 0.3 m et 6 m, préférentiellement entre 0.3 m et 2.5 m, plus préférentiellement entre 0.6 m et 1.5 m.

La présente invention se rapporte également à une pièce de raccordement dont la paroi est réalisée en toute ou partie par fabrication additive. Préférentiellement, la paroi est entièrement réalisée par fabrication additive.

D'après la norme ISO/ASTM52900:2015(F), le terme « fabrication additive » est le terme général utilisé pour les technologies qui, sur la base d'une représentation géométrique, créent des objets physiques par ajout successif de matériau. La norme ISO/ASTM52900:2015(F) définie le terme « fabrication additive » de la façon suivante : procédé consistant à assembler des matériaux pour fabriquer des pièces à partir de données de modèle en 3D, en général couche après couche, à l'inverse des méthodes de fabrication soustractive et de fabrication mise en forme.

Les inventeurs ont constaté que l'invention permet de pratiquer un traitement thermique homogène sur la pièce de raccordement, notamment dans la portion de transition en raison de l'homogénéité de l'épaisseur de la paroi. Ce qui n'est pas le cas dans l'art antérieur car l'inhomogénéité de l'épaisseur de la paroi dans la portion de transition est telle que les effets d'un traitement thermique sur la pièce de raccordement présenteront inévitablement des inhomogénéités au sein de la portion de transition.

De façon surprenante, les inventeurs ont également constaté que grâce à l'homogénéité de l'épaisseur de la paroi dans la portion de transition, il est également possible de pratiquer un contrôle non destructif par ultrasons sur la pièce raccordement de l'invention. Le contrôle non destructif par ultrasons a pour but de détecter les défauts dans la paroi d'une pièce en se basant sur l'émission de signaux sous forme d'ultrasons et la détection de leur réflexion liée aux interfaces acoustiques qu'ils rencontrent dans l'épaisseur de la paroi. Plus précisément, les dimensions, la forme et l'emplacement d'un défaut sont déterminés en fonction du temps écoulé entre l'émission d'un signal ultrasonique à un emplacement précis sur la paroi de la pièce, et la détection de sa réflexion à un autre emplacement précis de la paroi. Ainsi, lorsque la paroi présente d'importantes différences d'épaisseur entre l'emplacement d'émission du signal et l'emplacement de la détection de la réflexion de ce signal, ledit signal peut provenir d'une telle variété de trajectoires des ultrasons émis qu'il est difficilement isolable des autres signaux. Ainsi, le signal à détecter ne peut pas être exploité pour évaluer le défaut à identifier. Par conséquent, de telles mesures ne sont pas fiables lorsque la paroi d'une pièce de raccordement présente des différences importantes d'épaisseur, si bien que certaines zones ne peuvent pas être contrôlées, notamment dans la portion de transition, en raison de la présence de signaux retournés par des parcours ultrasonores liés à la géométrie de la pièce dans la portion de transition, notamment liés à l'épaisseur de la paroi et aux angles d'inclinaison des surfaces de transitions interne et externe. Par conséquent, dans l'art antérieur le contrôle non-destructif par ultrasons ne peut pas être pratiqué sur la pièce de raccordement. Il est donc pratiqué uniquement sur le bloc métallique avant que celui-ci ne soit soumis aux méthodes soustractives classiques et la pièce finale n'est jamais testée par ultrasons, laissant ainsi de potentiels défauts dans la paroi de la pièce après fabrication.

Un autre objet de l'invention concerne un procédé d'obtention d'une pièce de raccordement qui comprend au moins :

i. une étape de réalisation de la paroi en toute ou partie par fabrication additive,
ii. une étape d'usinage des première et deuxième extrémités.

Un tel procédé permet de se passer des méthodes soustractives au moins pour l'obtention de la paroi. La paroi constitue donc une préforme qui est ensuite filetée à l'étape d'usinage (ii) par des méthodes de l'état de l'art. Un tel procédé permet de limiter la quantité de matière nécessaire à l'obtention de la paroi, évitant ainsi le gaspillage de matière habituellement engendrée par les méthodes soustractives.

Selon l'invention, l'étape (i) peut être réalisée par l'une des méthodes de fabrication additive suivantes appartenant à la catégorie « Direct Energy Déposition » définit par la norme ASTM F2792, tel que « Laser Metal Déposition » (LMD), « Wire Arc Additive Manufacturing » (WAAM), ou tout autre méthode pouvant être qualifiée de procédé de « Direct Energy Déposition ».

Selon un mode de réalisation, le procédé comprend une troisième étape de traitement thermique (iii) de la pièce de raccordement.

Selon un mode réalisation, l'étape d'usinage (ii) comprend un usinage de toutes les surfaces de la pièce et peut être réalisée avant ou après l'étape de traitement thermique.

D'autres caractéristiques et avantages de l'invention apparaitront à l'examen de la description détaillée ci-après, et des dessins annexés.

[Fig. 1] : la figure 1 montre un schéma d'une vue en coupe longitudinale d'une pièce de raccordement de l'art antérieur ;
[Fig. 2] : la figure 2 montre un schéma d'une vue en coupe longitudinale d'une pièce de raccordement selon un mode de réalisation de l'invention ;

Les dessins annexés pourront non seulement servir à compléter l'invention, mais aussi contribuer à sa définition, le cas échéant. Ils ne sont pas limitatifs quant à la portée de l'invention.

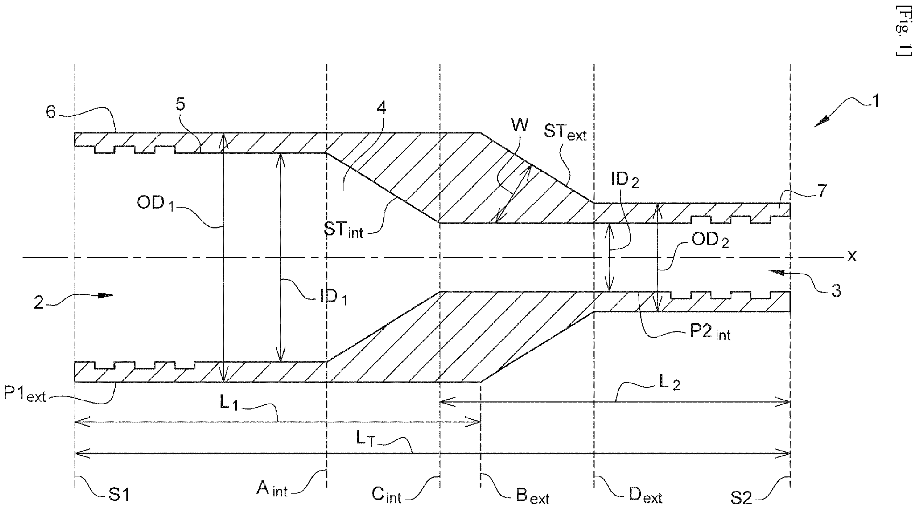

La figure 1 représente un schéma d'une vue en coupe longitudinale d'une pièce de raccordement (1) de l'art antérieur. La pièce de raccordement comprend un axe de révolution (x), une longueur axiale totale ($L_T$), une paroi (7), une surface interne (5) et une surface externe (6), une première extrémité (2) filetée et une deuxième extrémité (3) filetée, ainsi qu'une portion de transition (4).

La portion de transition (4) s'étend d'un premier plan de transition interne ($A_{int}$) jusqu'à un deuxième plan de transition externe ($D_{ext}$).

La première extrémité (2) est définie par un premier plan d'extrémité (S1) et une première portion de surface externe ($P1_{ext}$) qui s'étend sur une première longueur axiale ($L_1$) à partir du premier plan d'extrémité (S1) jusqu'à un premier plan de transition externe ($B_{ext}$).

La deuxième extrémité (3) est définie par un deuxième plan d'extrémité (S2) et une deuxième portion de surface interne ($P2_{int}$) qui s'étend sur une deuxième longueur axiale ($L_2$) à partir du deuxième plan d'extrémité (S2) jusqu'à un deuxième plan de transition interne ($C_{int}$).

Le deuxième plan de transition interne ($C_{int}$) traverse orthogonalement la première portion de surface externe ($P1_{ext}$). En d'autres termes, la première portion de surface externe ($P1_{ext}$) et la deuxième portion de surface interne ($P2_{int}$) se superposent dans la partie délimitée par le deuxième plan de transition interne ($C_{int}$) et le premier plan de transition externe ($B_{ext}$). Ainsi, la première longueur axiale ($L_1$) et la deuxième longueur axiale ($L_2$) sont telles que leurs sommes est supérieure à la longueur axiale totale ($L_T$) de la pièce de raccordement (1). Il en résulte un surplus de matière et une épaisseur importante de la paroi (7) dans la portion de transition (4), notamment dans la partie définie entre le deuxième plan de transition interne ($C_{int}$) et le premier plan de transition externe ($B_{ext}$) dans laquelle les portions ($P1_{ext}$) et ($P2_{int}$) se superposent.

Pour pouvoir obtenir une épaisseur de paroi plus faible et plus homogène dans la portion de transition de la pièce de raccordement, les géométries des pièces de raccordement de l'art antérieur sont insuffisantes car un surplus de matière est constamment présent dans la portion de transition.

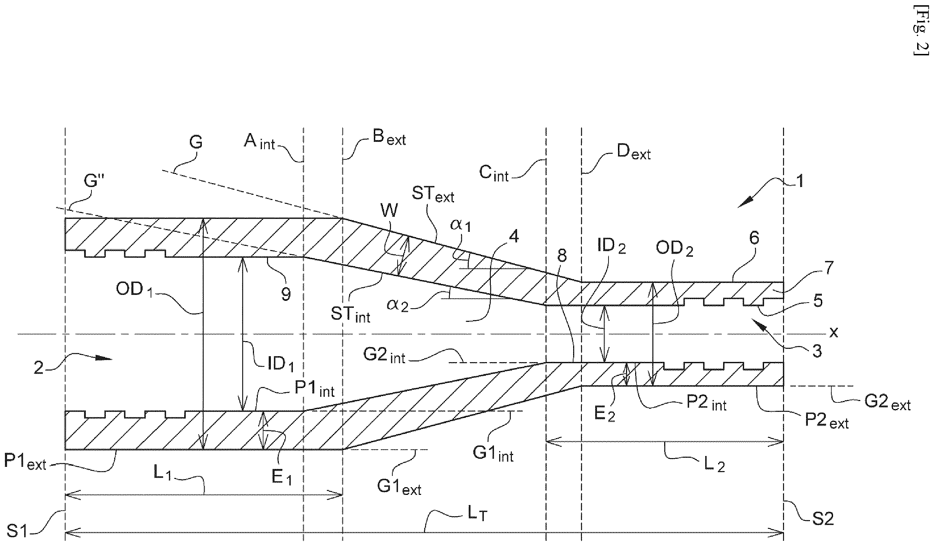

La figure 2 représente de façon schématique, dans une vue en coupe longitudinale, une pièce de raccordement (1) selon un mode de réalisation de l'invention. La pièce de raccordement (1) comprend une première extrémité (2) filetée, une deuxième extrémité (3) filetée et une portion de transition (4) qui relie les extrémités (2) et (3). En outre, la pièce (1) comprend une paroi (7) délimitée par une surface interne (5) et une surface externe (6).

La paroi (7) comporte plusieurs portions qui peuvent être délimitées par des plans d'extrémités et/ou des plans de transitions. Plus précisément, la pièce de raccordement (1) représentée sur la figure 2 comporte un premier plan d'extrémité (S1) et un deuxième plan d'extrémité (S2), un premier plan de transition interne ($A_{int}$) et un deuxième plan de transition interne ($C_{int}$), un premier plan de transition externe ($B_{ext}$) et un deuxième plan de transition externe ($D_{ext}$).

La première extrémité (2) possède un premier diamètre interne ($ID_1$) et un premier diamètre externe ($OD_1$). La première extrémité (2) s'étend du premier plan d'extrémité (S1) jusqu'au premier plan de transition externe ($B_{ext}$).

La représentation du filetage sur les figures est schématique. Typiquement, les filets des deux extrémités ont des faces inclinées.

La première extrémité (2) comprend une première portion de surface externe ($P1_{ext}$) qui s'étend sur une première longueur axiale ($L_1$). La première longueur axiale ($L_1$) est supérieure à une longueur axiale sur laquelle s'étend une première portion de surface interne ($P1_{int}$).

La première extrémité (2) possède en outre une première partie non filetée (9) qui s'étend sur une première longueur non filetée ($I_1$). La paroi (7) de la première extrémité (2) possède une première épaisseur (E1) sensiblement constante sur toute la première longueur non filetée ($I_1$). Autrement dit, la première épaisseur (E1) est sensiblement constante sur toute la portion paroi (7) au sein de laquelle la première portion de surface interne ($P1_{int}$) et la première portion surface externe ($P1_{ext}$) se superposent.

La première partie non filetée (9) a une position proximale à la portion de transition (4). Dans la partie filetée de la première extrémité (2), la première épaisseur (E1) varie en fonction du dimensionnement et de la géométrie des filets. La figure 2 représentent une mode de réalisation dans lequel la première extrémité (2) possède un filetage femelle, c'est-à-dire que la surface interne (5) est filetée et la surface externe (6) est non filetée. Cependant, selon l'invention, le filetage peut être présent soit sur la surface interne (5), soit sur la surface externe (6) de la première extrémité (2). La partie filetée de la première extrémité (2) a une position distale à la portion de transition (4).

La deuxième extrémité (3) possède un deuxième diamètre interne ($ID_2$) et un deuxième diamètre externe ($OD_2$). Le deuxième diamètre interne ($ID_2$) est inférieur au premier diamètre interne ($ID_1$) et le deuxième diamètre externe ($OD_2$) est inférieur au premier diamètre externe ($OD_1$). La deuxième extrémité (3) s'étend du deuxième plan d'extrémité (S2) jusqu'au deuxième plan de transition interne ($C_{int}$).

La deuxième extrémité (3) comprend une deuxième portion de surface interne ($P2_{int}$) qui s'étend sur une deuxième longueur axiale ($L_2$). La deuxième longueur axiale ($L_2$) est supérieure à une longueur axiale sur laquelle s'étend la deuxième portion de surface externe ($P2_{ext}$).

La deuxième extrémité (3) possède en outre une deuxième partie non filetée (8) qui s'étend sur une deuxième longueur non filetée ($I_2$). La paroi (7) de la deuxième extrémité (3) possède une deuxième épaisseur (E2) sensiblement constante sur toute la deuxième longueur non filetée (h). Autrement dit, la deuxième épaisseur (E2) est sensiblement constante sur toute la portion paroi (7) au sein de laquelle la deuxième portion de surface interne ($P2_{int}$) et la deuxième portion surface externe ($P2_{ext}$) se superposent.

La deuxième partie non filetée (8) a une position proximale à la portion de transition (4). Dans la partie filetée de la deuxième extrémité (3), la deuxième épaisseur (E2) varie en fonction du dimensionnement et de la géométrie des filets. La figure 2 représente un mode de réalisation dans lequel la deuxième extrémité (3) possède un filetage femelle, c'est-à-dire que la surface interne (5) est filetée et la surface externe (6) est non filetée. Cependant, selon l'invention, le filetage peut être présent soit sur la surface interne (5), soit sur la surface externe (6) de la deuxième extrémité (3). La partie filetée de la deuxième extrémité (3) a une position distale à la portion de transition (4).

Les première et deuxième extrémités (2) et (3) sont représentées sur la figure 2 comme ayant toutes les deux un filetage femelle, cependant la présente invention englobe également le cas où les extrémités (2) et (3) ont toutes les deux un filetage mâle, mais aussi le cas où l'une des deux extrémités (2) et (3) a un filetage femelle et l'autre un filetage mâle.

La portion de transition (4) s'étend du premier plan de transition interne ($A_{int}$) au deuxième plan de transition externe ($D_{ext}$). Par conséquent, la pièce de raccordement (1) comprend deux portions de paroi au sein desquelles les extrémités (2) et (3) se confondent avec la portion de transition (4). Ces deux portions sont appelées zones de raccordement. Chacune des zones de raccordement est défini par un rayon de raccordement interne et un rayon de raccordement externe (non représentés sur les figures) qui donne une forme arrondie aux zones de raccordement. Le rayon de courbure de cet arrondi, c'est-à-dire le rayon de raccordement, peut être compris entre 20 mm et 80 mm inclusivement, préférentiellement entre 25 et 65 mm inclusivement. Plus préférentiellement, les rayons de raccordement mesurent 50 mm. Les rayons de raccordement doivent respecter ces dimensions de façon à limiter la concentration des contraintes, ou forces, qui s'appliquent à la portion de transition (4) lorsque la pièce de raccordement (1) est en conditions opérationnelles. En cas de mauvais dimensionnement, ces contraintes risquent de dépasser la limite d'élasticité de la pièce de raccordement (1).

La première zone de raccordement est délimitée par le premier plan de transition interne ($A_{int}$) et le premier plan de transition externe ($B_{ext}$), et la deuxième zone de raccordement est délimitée par le deuxième plan de transition interne ($C_{int}$) et le deuxième plan de transition externe ($D_{ext}$). Les première et deuxième zones de raccordement permettent de raccorder progressivement les première et deuxième extrémités (2) et (3) à la portion de transition (4). Dans les zones de raccordement, seul l'un des diamètres interne et externe de la pièce (1) varie, et l'autre ne varie pas. Ainsi, dans la première zone de raccordement, seul le diamètre interne ($ID_1$) varie selon une pente ayant une inclinaison d'angle $\alpha 1$ par rapport à l'axe (x). Dans la deuxième zone de raccordement, seul le deuxième diamètre externe ($OD_2$) varie selon une pente ayant une inclinaison d'angle $\alpha 2$ par rapport à l'axe (x).

La portion de paroi (7) qui possède l'épaisseur de transition (W) est située entre les deux zones de raccordement. Plus précisément, la portion de paroi (7) qui possède l'épaisseur de transition (W) s'étend du premier plan de transition externe ($B_{ext}$) au deuxième plan de transition interne ($C_{int}$). Dans cette portion de paroi (7), les surfaces interne (5) et externe (6) sont appelées respectivement surface de transition externe ($ST_{ext}$) et surface de transition interne (STint). Contrairement aux zones de raccordement, dans cette portion de paroi (7) qui possède l'épaisseur de transition (W), les diamètres interne et externe varient tous les deux. Le diamètre interne varie selon une pente ayant une inclinaison d'angle $\alpha 2$ par rapport à l'axe (x). Le diamètre externe varie selon une pente ayant une inclinaison d'angle $\alpha 1$ par rapport à l'axe (x). Les angles $\alpha 1$ et $\alpha 2$ ont tous les deux une valeur comprise entre 10° et 30 ° inclusivement tel que : $10°\leq \alpha 1 \leq 30°$ et $10°\leq \alpha 2 \leq 30°$. La différence d'inclinaison entre les surfaces de transition interne ($ST_{int}$) et externe ($ST_{ext}$) ne dépasse pas 5 degrés inclusivement, et préférentiellement elle ne dépasse pas 2 degrés inclusivement, tel que : $|\alpha 1 - \alpha 2| \leq 5°$, préférentiellement $|\alpha 1 - \alpha 2| \leq 2°$.

## Revendications

1.  Pièce de raccordement tubulaire métallique (1) possédant au moins un axe de révolution (x) et une longueur axiale totale ($L_T$), ladite pièce de raccordement (1) présentant une limite d'élasticité supérieure ou égale à 550 MPa, ladite pièce de raccordement (1) comprenant :

    - une surface interne (5) et une surface externe (6), lesdites surfaces interne (5) et externe (6) délimitant une paroi (7),
    - au moins un premier plan de transition externe ($B_{ext}$) et au moins un deuxième plan de transition externe ($D_{ext}$), lesdits plans de transition externe ($B_{ext}$) et ($D_{ext}$) étant tous les deux orthogonaux à l'axe de révolution (x),
    - au moins un premier plan de transition interne ($A_{int}$) et au moins un deuxième plan de transition interne ($C_{int}$), lesdits plans de transition interne ($A_{int}$) et ($C_{int}$) étant tous les deux orthogonaux à l'axe de révolution (x),
    - une surface de transition externe ($ST_{ext}$) qui présente une forme tronconique définie par une génératrice de transition externe (G) ayant une inclinaison d'angle $\alpha 1$ par rapport à l'axe de révolution (x), ladite surface de transition externe ($ST_{ext}$) s'étendant à partir du premier plan de transition externe ($B_{ext}$) jusqu'au deuxième plan de transition externe ($D_{ext}$),
    - une surface de transition interne ($ST_{int}$) qui présente une forme tronconique définie par une génératrice de transition interne (G") ayant une inclinaison d'angle $\alpha 2$ par rapport à l'axe de révolution (x), ladite surface de transition interne ($ST_{int}$) s'étendant à partir du premier plan de transition interne ($A_{int}$) jusqu'au deuxième plan de transition interne ($C_{int}$),
    lesdites surfaces de transition externe ($ST_{ext}$) et interne ($ST_{int}$) délimitant une épaisseur de transition (W) de paroi (7),
    - une première extrémité (2) filetée mâle ou femelle, possédant un premier plan d'extrémité (S1) orthogonal à l'axe de révolution (x), un premier diamètre interne ($ID_1$) et un premier diamètre externe ($OD_1$), ladite première extrémité (2) étant définie par une première portion de surface interne ($P1_{int}$) de diamètre interne ($ID_1$) et s'étendant à partir du premier plan d'extrémité (S 1) jusqu'au premier plan de transition interne ($A_{int}$), et par une première portion de surface externe ($P1_{ext}$) de diamètre externe ($OD_1$) et s'étendant sur une première longueur axiale ($L_1$) à partir du premier plan d'extrémité (S1) jusqu'au premier plan de transition externe ($B_{ext}$), ladite première portion de surface interne ($P1_{int}$) présentant une forme substantiellement cylindrique définie par une première génératrice de surface interne ($G1_{int}$), et ladite première portion de surface externe ($P1_{ext}$) présentant une forme substantiellement cylindrique définie par une première génératrice de surface externe ($G1_{ext}$),
    - une deuxième extrémité (3) filetée mâle ou femelle, possédant un deuxième plan d'extrémité (S2) orthogonal à l'axe de révolution (x), un deuxième diamètre interne ($ID_2$) et un deuxième diamètre externe ($OD_2$), ladite deuxième extrémité (3) étant définie par une deuxième portion de surface interne ($P2_{int}$) de diamètre interne ($ID_2$) et s'étendant sur une deuxième longueur axiale ($L_2$) à partir du deuxième plan d'extrémité (S2) jusqu'au deuxième plan de transition interne ($C_{int}$), et par une deuxième portion de surface externe ($P2_{ext}$) de diamètre externe ($OD_2$) et s'étendant à partir du deuxième plan d'extrémité (S2) jusqu'au deuxième plan de transition externe ($D_{ext}$), ladite portion de surface interne ($P2_{int}$) présentant une forme substantiellement cylindrique définie par une deuxième génératrice de surface interne ($G2_{int}$), ladite deuxième portion de surface externe ($P2_{ext}$) présentant une forme substantiellement cylindrique définie par une deuxième génératrice de surface externe ($G2_{ext}$),
    la somme des première et deuxième longueurs axiales ($L_1$) et ($L_2$) étant inférieure ou égale à la longueur axiale totale (L$_T$) de la pièce de raccordement (1),
ladite pièce de raccordement (1) étant **caractérisée en ce que** la première extrémité (2) possède une première épaisseur (E1) de paroi (7), la deuxième extrémité (3) possède une deuxième épaisseur (E2) de paroi (7), et l'épaisseur de transition (W) respecte l'équation suivante :

$$[Math] \qquad 1 \text{ x max (E1; E2)} \leq W \leq 1{,}5 \text{ x max (E1; E2)}$$

Où : max (E1 ; E2) représente la plus grande valeur choisie parmi les première et deuxième épaisseurs (E1) et (E2), et correspond à (E1) et à (E2) lorsque (E1) et (E2) sont égales.

2. Pièce de raccordement (1) selon la revendication 1, **caractérisée en ce que** la première extrémité (2) possède au moins une première partie non filetée (9), et la deuxième extrémité (3) possède au moins une deuxième partie non filetée (8).

3. Pièce de raccordement (1) selon la revendication 2, **caractérisée en ce que** la première partie non filetée (9) s'étend sur une première longueur non filetée (l$_1$) à partir du premier plan de transition interne (A$_{int}$), et la deuxième partie non filetée (8) s'étend sur une deuxième longueur non filetée (l$_2$) à partir du deuxième plan de transition interne (C$_{int}$).

4. Pièce de raccordement (1) selon l'une quelconque des revendications précédentes, **caractérisée en ce que** les angles α1 et α2 sont tous les deux compris inclusivement entre 10° et 30° par rapport à l'axe de révolution (x).

5. Pièce de raccordement (1) selon l'une quelconque des revendications précédentes, **caractérisée en ce que** les angles α1 et α2 sont tels que |α1 - α2| ≤ 5°, préférentiellement les angles α1 et α2 sont tels que |α1 - α2| ≤ 2°.

6. Pièce de raccordement (1) selon l'une quelconque des revendications précédentes, **caractérisée en ce que** la paroi (7) est réalisée en toute ou partie par fabrication additive.

7. Procédé d'obtention d'une pièce de raccordement (1) selon l'une quelconque des revendications précédentes, **caractérisé en ce que** ledit procédé comprend au moins :

   i. une étape de réalisation de la paroi (7) en toute ou partie par fabrication additive,
   ii. une étape d'usinage des première et deuxième extrémités (2) et (3).

**Patentansprüche**

1. Metallisches rohrförmiges Anschlussstück (1), das mindestens eine Rotationsachse (x) und eine axiale Gesamtlänge (L$_T$) besitzt, wobei das Anschlussstück (1) eine Elastizitätsgrenze aufweist, die größer oder gleich 550 MPa ist, wobei das Anschlussstück (1) umfasst:

   - eine Innenfläche (5) und eine Außenfläche (6), wobei die Innen- (5) und die Außenfläche (6) eine Wand (7) begrenzen,
   - mindestens eine erste Außenübergangsebene (B$_{ext}$) und mindestens eine zweite Außenübergangsebene (D$_{ext}$), wobei die Außenübergangsebenen (B$_{ext}$) und (D$_{ext}$) beide orthogonal zur Rotationsachse (x) sind,
   - mindestens eine erste Innenübergangsebene (A$_{int}$) und mindestens eine zweite Innenübergangsebene (C$_{int}$), wobei die Innenübergangsebenen (A$_{int}$) und (C$_{int}$) beide orthogonal zur Rotationsachse (x) sind,
   - eine äußere Übergangsfläche (ST$_{ext}$), die eine Kegelstumpfform aufweist, die durch eine äußere Übergangserzeugende (G) definiert ist, die einen Neigungswinkel αl bezüglich der Rotationsachse (x) aufweist, wobei sich die äußere Übergangsfläche (ST$_{ext}$) von der ersten Außenübergangsebene (B$_{ext}$) bis zur zweiten Außenübergangsebene (D$_{ext}$) erstreckt,
   - eine innere Übergangsfläche (ST$_{int}$), die eine Kegelstumpfform aufweist, die durch eine innere Übergangserzeugende (G") definiert ist, die einen Neigungswinkel α2 bezüglich der Rotationsachse (x) aufweist, wobei sich die innere Übergangsfläche (ST$_{int}$) von der ersten Innenübergangsebene (A$_{int}$) bis zur zweiten Innenübergangsebene (C$_{int}$) erstreckt,
   wobei die äußere (ST$_{ext}$) und die innere Übergangsfläche (ST$_{int}$) eine Übergangsdicke (W) der Wand (7) begrenzen,
   - ein erstes Ende (2) mit Außen- oder Innengewinde, das eine zur Rotationsachse (x) orthogonale erste Endebene (S1), einen ersten Innendurchmesser ($ID_1$) und einen ersten Außendurchmesser ($OD_1$) besitzt, wobei das erste Ende (2) durch einen ersten Innenflächenabschnitt ($P1_{int}$) mit dem Innendurchmesser ($ID_1$), der sich von der ersten Endebene (S1) bis zur ersten Innenübergangsebene ($A_{int}$) erstreckt, und durch einen ersten Außenflächenabschnitt ($P1_{ext}$) mit dem Außendurchmesser ($OD_1$), der sich auf einer ersten axialen Länge ($L_1$) von der ersten Endebene (S1) bis zur ersten Außenübergangsebene ($B_{ext}$) erstreckt, definiert ist, wobei der erste Innenflächenabschnitt ($P1_{int}$) eine im Wesentlichen zylindrische Form aufweist, die durch eine erste Innenflächenerzeugende ($G1_{int}$) definiert ist, und der erste Außenflächenabschnitt ($P1_{ext}$) eine im Wesentlichen zylindrische Form aufweist, die durch eine erste Außenflächenerzeugende ($G1_{ext}$) definiert ist,

- ein zweites Ende (3) mit Außen- oder Innengewinde, das eine zur Rotationsachse (x) orthogonale zweite Endebene (S2), einen zweiten Innendurchmesser ($ID_2$) und einen zweiten Außendurchmesser ($OD_2$) besitzt, wobei das zweite Ende (3) durch einen zweiten Innenflächenabschnitt ($P2_{int}$) mit dem Innendurchmesser ($ID_2$), der sich auf einer zweiten axialen Länge ($L_2$) von der zweiten Endebene (S2) bis zur zweiten Innenübergangsebene ($C_{int}$) erstreckt, und durch einen zweiten Außenflächenabschnitt ($P2_{ext}$) mit dem Außendurchmesser ($OD_2$), der sich von der zweiten Endebene (S2) bis zur zweiten Außenübergangsebene ($D_{ext}$) erstreckt, definiert ist, wobei der Innenflächenabschnitt ($P2_{int}$) eine im Wesentlichen zylindrische Form aufweist, die durch eine zweite Innenflächenerzeugende ($G2_{int}$) definiert ist, wobei der zweite Außenflächenabschnitt ($P2_{ext}$) eine im Wesentlichen zylindrische Form aufweist, die durch eine zweite Außenflächenerzeugende ($G2_{ext}$) definiert ist,

wobei die Summe der ersten und der zweiten axialen Länge ($L_1$) und ($L_2$) kleiner oder gleich der axialen Gesamtlänge ($L_t$) des Anschlussstücks (1) ist,

wobei das Anschlussstück (1) **dadurch gekennzeichnet ist, dass** das erste Ende (2) eine erste Dicke (E1) der Wand (7) besitzt, das zweite Ende (3) eine zweite Dicke (E2) der Wand (7) besitzt und die Übergangsdicke (W) der folgenden Gleichung genügt:

$$1 \times \max(E1; E2) \leq W \leq 1{,}5 \times \max(E1; E2)$$

wobei: max (E1; E2) den größeren Wert von der ersten und der zweiten Dicke (E1) und (E2) bezeichnet und (E1) und (E2) entspricht, wenn (E1) und (E2) gleich sind.

2. Anschlussstück (1) nach Anspruch 1, **dadurch gekennzeichnet, dass** das erste Ende (2) mindestens einen ersten gewindefreien Teil (9) besitzt und das zweite Ende (3) mindestens einen zweiten gewindefreien Teil (8) besitzt.

3. Anschlussstück (1) nach Anspruch 2, **dadurch gekennzeichnet, dass** sich der erste gewindefreie Teil (9) von der ersten Innenübergangsebene ($A_{int}$) aus über eine erste gewindefreie Länge ($l_1$) erstreckt und der zweite gewindefreie Teil (8) sich von der zweiten Innenübergangsebene ($C_{int}$) aus über eine zweite gewindefreie Länge ($l_2$) erstreckt.

4. Anschlussstück (1) nach einem der vorhergehenden Ansprüche, **dadurch gekennzeichnet, dass** die Winkel $\alpha1$ und $\alpha2$ beide zwischen 10° und 30° einschließlich bezüglich der Rotationsachse (x) liegen.

5. Anschlussstück (1) nach einem der vorhergehenden Ansprüche, **dadurch gekennzeichnet, dass** für die Winkel $\alpha1$ und $\alpha2$ gilt $|\alpha1 - \alpha2| \leq 5°$, vorzugsweise für die Winkel $\alpha1$ und $\alpha2$ gilt $|\alpha1 - \alpha2| \leq 2°$.

6. Anschlussstück (1) nach einem der vorhergehenden Ansprüche, **dadurch gekennzeichnet, dass** die Wand (7) ganz oder teilweise durch generative Fertigung hergestellt ist.

7. Verfahren zum Erhalten eines Anschlussstücks (1) nach einem der vorhergehenden Ansprüche, **dadurch gekennzeichnet, dass** das Verfahren mindestens umfasst:

i. einen Schritt der Herstellung der Wand (7), ganz oder teilweise, durch generative Fertigung,
ii. einen Schritt der Bearbeitung des ersten und des zweiten Endes (2) und (3).

**Claims**

1. Metal tubular connecting part (1) having at least an axis of revolution (x) and a total axial length ($L_T$), said connecting part (1) having a yield strength greater than or equal to 550 MPa, said connecting part (1) comprising:

- an inner surface (5) and an outer surface (6), said inner surface (5) and outer surface (6) delimiting a wall (7),
- at least a first outer transition plane ($B_{ext}$) and at least a second outer transition plane ($D_{ext}$), both of said outer transition planes ($B_{ext}$) and ($D_{ext}$) being orthogonal to the axis of revolution (x),
- at least a first inner transition plane ($A_{int}$) and at least a second inner transition plane ($C_{int}$), both of said inner transition planes ($A_{int}$) and ($C_{int}$) being orthogonal to the axis of revolution (x),
- an outer transition surface ($ST_{ext}$) which has a frustoconical shape defined by an outer transition generatrix (G) having an inclination of angle $\alpha1$ to the axis of revolution (x), said outer transition surface ($ST_{ext}$) extending from the first outer transition plane ($B_{ext}$) as far as the second outer transition plane ($D_{ext}$),
- an inner transition surface ($ST_{int}$) which has a frustoconical shape defined by an inner transition generatrix (G") having an inclination of angle $\alpha2$ to the axis of revolution (x), said inner transition surface ($ST_{int}$) extending from the first inner transition plane ($A_{int}$) as far as the second inner transition plane ($C_{int}$), said outer transition surface ($ST_{ext}$) and inner transition surface ($ST_{int}$) delimiting a transition thickness (W) of the wall (7),
- a first male or female threaded end (2), having a first end plane (S1) orthogonal to the axis of revolution (x), a first inner diameter ($ID_1$) and a first outer diameter ($OD_1$), said first end (2) being defined by a first inner surface portion ($P1_{int}$) of inner diameter ($ID_1$) and extending from the first end plane (S1) as far as the first inner transition plane ($A_{int}$), and by a first outer surface portion ($P1_{ext}$) of outer diameter ($OD_1$) and extending over a first axial length ($L_1$) from the first end plane (S1) as far as the first outer transition plane ($B_{ext}$), said first inner surface portion ($P1_{int}$) having a substantially cylindrical shape defined by a first inner surface generatrix ($G1_{int}$), and said first outer surface portion ($P1_{ext}$) having a substantially cylindrical shape defined by a first outer surface generatrix ($G1_{ext}$),
- a second male or female threaded end (3), having a second end plane (S2) orthogonal to the axis of revolution (x), a second inner diameter ($ID_2$) and a second outer diameter ($OD_2$), said second end (3) being defined by a second inner surface portion ($P2_{int}$) of inner diameter ($ID_2$) and extending over a second axial length ($L_2$) from the second end plane (S2) as far as the second inner transition plane ($C_{int}$), and by a second outer surface portion ($P2_{ext}$) of outer diameter ($OD_2$) and extending from the second end plane (S2) as far as the second outer transition plane ($D_{ext}$), said inner surface portion ($P2_{int}$) having a substantially cylindrical shape defined by a second inner surface generatrix ($G2_{int}$), said second outer surface portion ($P2_{ext}$) having a substantially cylindrical shape defined by a second outer surface generatrix ($G2_{ext}$), the sum of the first and second axial lengths ($L_1$) and ($L_2$) being less than or equal to the total axial length ($L_T$) of the connecting part (1),

said connecting part (1) being **characterised in that** the first end (2) has a first thickness (E1) of the wall (7), the second end (3) has a second thickness (E2) of the wall (7), and the transition thickness (W) satisfies the following equation:

$$[Math] \qquad 1 \text{ x max } (E1; E2) \leq W \leq 1.5 \text{ x max } (E1; E2)$$

Where: max (E1; E2) represents the largest value selected from the first and second thicknesses (E1) and (E2), and corresponds to (E1) and to (E2) when (E1) and (E2) are equal.

2. Connecting part (1) according to claim 1, **characterised in that** the first end (2) has at least one first non-threaded part (9), and the second end (3) has at least one second non-threaded part (8).

3. Connecting part (1) according to claim 2, **characterised in that** the first non-threaded part (9) extends over a first non-threaded length ($l_1$) from the first inner transition plane ($A_{int}$), and the second non-threaded part (8) extends over a second non-threaded length ($l_2$) from the second inner transition plane ($C_{int}$).

4. Connecting part (1) according to any one of the preceding claims, **characterised in that** the angles $\alpha1$ and $\alpha2$ are both between 10° and 30° inclusive relative to the axis of revolution (x).

5. Connecting part (1) according to any one of the preceding claims, **characterised in that** the angles $\alpha1$ and $\alpha2$ are such that $|\alpha1 - \alpha2| \leq 5°$, preferably the angles $\alpha1$ and $\alpha2$ are such that $|\alpha1 - \alpha2| \leq 2°$.

6. Connecting part (1) according to any one of the preceding claims, **characterised in that** the wall (7) is produced wholly or partially by additive manufacturing.

7. Method for obtaining a connecting part (1) according to any one of the preceding claims, **characterised in that** said method comprises at least:

 i. a step of producing the wall (7) wholly or partially by additive manufacturing,
 ii. a step of machining the first and second ends (2) and (3).

[Fig. 1]

[Fig. 2]

**EP 4 222 400 B1**

## RÉFÉRENCES CITÉES DANS LA DESCRIPTION

**Documents brevets cités dans la description**

- US 2011227337 A
- US 2016376849 A
- US 5423579 A